# EUROPEAN PATENT APPLICATION

(11) **EP 4 343 301 A1**
(43) Date of publication of application: **27.03.2024**
(21) Application number: 22196847.2
(22) Date of filing: 21.09.2022
(51) Int. Cl.: G01M 5/00, F03D 17/00

(54) **METHOD FOR IDENTIFYING PERIODIC SHOCKS IN A STRUCTURE, WIND TURBINE GENERATOR AND A WIND FARM ADAPTED FOR PERFORMING THE METHOD**

(71) Applicant: Ventus Engineering GmbH, 1110 Vienna (AT)
(72) Inventor: LÜBKER, Poul Anker Skaarup, 6340 Baar (CH); MINGALIEV, Shavkat, 1010 Wien (AT); TOLRON, Xavier, 1120 Wien (AT); GAZDIC, Tim, 1050 Vienna (AT)
(74) Representative: Patrade A/S

(57) **Abstract**

A method (1000) for identifying periodic shocks in a structure (10), wherein the structure (10) comprises one or more accelerometers (20), the method (1000) comprises steps of:
- measuring (1200) sensory data (120) of the one or more accelerometers (20);
- timestamping and time synchronizing (1210) the sensory data (120) and high-pass filtering (1220) the sensory data (120);
- identifying (1300) peak accelerations (130), wherein the peak accelerations (130) are defined as accelerations above a threshold value (200);
- identifying (1300) dominant shocks (132), wherein the dominant shocks (132) are defined as the highest value of each peak acceleration (130);
- identifying (1300) periodic shocks (134) as a function of the dominant shocks (132);
- storing (1400) characteristics of periodic shocks (134), and optionally the sensory data (120) of the periodic shocks (134).

## Description

### Field of the Invention

The present invention relates to a method for identifying periodic shocks in a structure, such as wind turbine blades, or wind turbine generators, or bridges, or the like. Periodic shocks can in general be assumed to have the same shock origin, and thus, when combined and analyzed, periodic shocks provide information about the shock origin. Hence, the sheer number of periodic shocks gives information about the structure.

In this application, the structure may refer to a wind turbine blade, or a wind turbine tower, or a wind turbine rotor hub, or a wind turbine nacelle, or a wind turbine generator, or a pylon, or a high-rise building, or a bridge, or a dam, or similar.

### Background of the Invention

There is a continuous effort to improve the surveillance of structures in general as the surveillance can be used for evaluating the wear of the structure. Furthermore, the surveillance enables early detection of damages and/or changes to the structure early on such that the accumulated damage can be reduced by stopping the operation of the structure or just by early repair.

Many structures will induce internal shocks due to internal friction, or loose objects, or structural defects. There will likewise be external shocks due to external events, such as bird impacts, or other impacts, or lightning strikes. The difference between the external shocks and internal shocks is that some of the internal shocks will be periodic, i.e., a structural defect may cause a shock when the structure is in a in a certain position as the structure moves or sways which may result in periodic shocks.

External shocks will not induce periodic shocks unless by chance, however the chance is very low.

Thus, there is a need for a method for identifying periodic shocks, which then can be used for quantitative analysis or qualitative analysis of the periodic shocks.

Furthermore, there is a need for quantitative analysis of all shocks detected in a structure.

### Object of the Invention

It is an object of the invention to provide a method for quantitative analysis or qualitative analysis of periodic shocks detected in a structure and quantitative analysis of all shocks detected for a structure.

### Description of the Invention

An object of the invention is achieved by a method for identifying periodic shocks in a structure, wherein the structure comprises one or more accelerometers. The method comprises steps of:
- measuring sensory data of the one or more accelerometers;
- timestamping and time synchronizing the sensory data and high-pass filtering the sensory data;
- identifying peak accelerations, wherein the peak accelerations are defined as accelerations above a threshold value;
- identifying dominant shocks, wherein the dominant shocks are defined as the highest value of each peak acceleration;
- identifying periodic shocks as a function of the dominant shocks; and
- storing characteristics of the periodic shocks, and optionally the sensory data of the periodic shocks.

The characteristics of the periodic shocks may include the number of periodic shocks and intensity of periodic shocks. The sensory data of the periodic shocks may further be defined as characteristics of the periodic shocks.

Thereby, the method can at least identify the number of periodic shocks and intensity of periodic shocks from where the mean intensity can be calculated. In some embodiments, the intensities of the individual periodic shocks are not stored instead the mean intensity of the periodic shocks are stored wherein the mean intensity is calculated relative to a pre-set time such that changes over time to the mean intensity can be analysed.

The purpose of the high-pass filtering of the sensory data is to remove any low frequency signal which can be due to oscillation of the structure or due to movement of the structure. If the structure is a wind turbine blade, then the blade will rotate about the rotor of the wind turbine generator which will result in a low frequency signal essentially showing the rounds per minute of the rotor. This is also shown in the figures. A shock is a high frequency event, and thus the low frequency signal can be removed, which enables that the step of identification can be simplified.

The threshold value may be a dynamic value. First, a mean value (x̅) and a standard deviation (*σ*) of the data in a time interval is calculated and a multiplier (*θ*) is chosen such that the threshold value is x̅ + (*σ* × *θ*). The multiplier is chosen such that the number of false positives and false negatives are reduced. The value of the multiplier depends on the structure and size of the peak accelerations, however the skilled person would be able to choose a suitable multiplier through standard experiments or trial and error. Any value above the threshold value is identified as a peak acceleration.

The multiplier may be chosen so that it maximizes an F1 score, which is the balance of precision and recall. Precision and recall themselves are functions of true positives, false positives and false negatives. This may be varied in specific cases.

The dominant shock is identified as the highest value of the peak acceleration. Thereafter a step of identifying the periodic shocks as a function of the dominant shocks, i.e., highest value of the peak acceleration, is performed.

The identification of the periodic shocks will also be an identification of dominant shocks which are deemed to be non-periodic shocks. The non-periodic dominant shocks may be due to a lightning strike, or due to a collision with an external unit such as a bird, or due to another event which is non-periodic.

The periodic shocks can be assumed to be due to a structural deficiency, such as a loose stud causing shocks or a loose object moving within the structure, as it is very unlikely that lightning strikes or bird collisions are periodic.

The step of storing may be a step of storing on a computer-readable medium. By storing the number of periodic shocks and intensity of the periodic shocks, the quantitative analysis of the periodic shocks can be performed. If the sensory data of the periodic shocks is also stored, then the method enables qualitative analysis of the periodic shock such as time and/or frequency domain analysis.

In an aspect, the step of storing may include a step of binning data into binned data as a function of a pre-set period, and for each set of binned data the step of storing includes storing a timestamp of the binned data, the characteristics of the periodic shocks.

The pre-set period should be sufficiently long such that periodic shocks can be identified. In most cases, if not all cases, the periodic shocks are induced due to movement of the structure which may be due to the structure swaying or wind turbine blade rotating about the rotor. A typical wind turbine blade will at a slow rotation speed rotate about 3 rotations per minute, and thus the pre-set period can for a wind turbine blade be 1 minute, however one may also choose 3 min, 5 min, 15 min, 30 min or 1 hour.

The pre-set period may be different for another type of structure or for future wind turbine blades.

The pre-set period may be equal to the time interval for calculating a mean and standard deviation. The threshold value may be dynamic which changes between binned data as a function of the mean and the standard deviation.

The characteristics of the periodic shocks may be the number of the periodic shocks and the mean intensity of the periodic shocks. These specific characteristics can be used for detecting changes to the structure over time. The number of periodic shocks may increase as a function of time and/or the mean intensity of the periodic shocks which implies an increase of wear, and the structure may require repair.

In an aspect, the structure may be chosen amongst
- a wind turbine blade; or
- a wind turbine tower; or
- a wind turbine rotor hub;
- a wind turbine nacelle; or
- a wind turbine generator (WTG); or
- a pylon; or
- a high-rise building; or
- a bridge or
- a dam.

The structure may be a wind turbine blade rotating about a rotor. If the wind turbine blade for example has a loose object, then the rotation will induce periodic shocks as the loose object will be displaced due to rotation of the blade and gravity. If the method is performed over a long period of time, then the loose object may be lodged together with an internal part of the blade by chance. This will cause the periodic shocks to stop, but at some point, the loose object will probably be dislodged, and a periodic shock will be detected once more. This can be repeated until the loose object is removed. If the loose object is not removed, then the loose object can cause damage on the internal structure of the blade or sensors inside the blade, thus the loose object should be removed after detection.

Blade and wind turbine blade is used interchangeably throughout this application.

There may be other causes of periodic shocks for a blade or wind turbine generator, such as a physical defect in the blade structure, or bearing defects in the yawing or pitching mechanisms, or loose blade studs in an individual blade.

The method may be performed for any number of blades connected to a common rotor. The method may further include a step of comparing the stored data of one blade with the stored data of the other blades as this will enable the method to identify structures which are outliers even if the knowledge of the root cause of the periodic shocks are limited. In most cases, the common rotor is equipped with three blades, and thus each blade is compared to the other two. In the case that one blade has significantly more periodic shocks than the others may indicate a defect isolated to that blade.

The step of comparing can be repeated for all dominant shocks.

The wind turbine tower will oscillate in part as a function of the length of the wind turbine tower and the weight of the nacelle and wind turbine blades. The method according to the invention will when performing the steps be able to identify periodic shocks for the wind turbine tower.

The structure may be a wind turbine generator and the wind turbine generator may comprise one or more accelerometers installed in the nacelle and/or the wind turbine rotor hub, and the wind turbine generator may comprise one or more accelerometers in one or more of the blades of the wind turbine generator. This will enable better triangulation of any shock origin. If there is a bearing defect in the yawing, then the one or more accelerometers positioned in the nacelle or positioned in the wind turbine rotor hub would register the periodic shock before the one or more accelerometers positioned along the blade, since the accelerometers in the nacelle and/or rotor hub are closer to the shock bearing and thus closer to the shock event. This will enable a relatively simple method for determining a general area of a shock origin.

In an aspect, the step of storing includes storing RPM of the one or more wind turbine blades during the periodic shocks, wherein the step of identifying periodic shocks is further performed as a function of the RPM.

The round per minute (RPM) of the one or more wind turbine blades can be received from a sensor of the wind turbine generator or be determined from the sensory data alone or be determined from the sensory data, which is low-pass filtered and analysed for determining the rounds per minute of the one or more wind turbine blades. This is especially useful when the wind turbine generator is operating a nominal power as the RPM is relatively constant.

A bearing defect or a loose object is expected to generate a periodic shock with a period highly correlated to the RPM. Furthermore, it is very simple to compare the period of periodic shocks with the RPM.

The method may likewise be performed on a wind turbine generator during operation start from cut-in to nominal power. The RPM of the one or more wind turbine blades will increase from cut-in to nominal power, thus if the shock is induced when a blade is in a specific angular angle, then the resulting sensory data will not have periodic shocks in the time domain, but the sensory data will still have periodic shocks in the angular domain. For shocks being induced by a specific blade position, the periodic shocks will have a period at nominal power corresponding to the RPM. Thereby, it is possible to determine whether the shock origin of the periodic shock is dependent on the blade position.

The method may further be improved if performed on a wind turbine generator comprising a plurality of accelerometers such that triangulation is possible to triangulate an area of shock origin. The sensory data of the periodic shock over time can be used in combination for reducing the area of shock origin.

The method may likewise be performed on a wind turbine generator during operation stop from nominal power to cut-out in the same way as for operation start.

In an aspect, the characteristics of periodic shocks may include storing mean shock intensity of the periodic shocks.

Thereby, the method enables monitoring of the periodic shocks over time and detection of changes over time of the mean shock intensity of the periodic shocks. This enables a user to estimate a future mean shock intensity and optionally a time for needed repair of the structure. This step can also be performed for all dominant shocks, i.e., both periodic shock and non-periodic shocks. A trend analysis will enable to predict when the structure for example a blade or wind turbine generator would require repair.

In an aspect, the one or more accelerometers may be chosen amongst 1D, 2D or 3D accelerometers.

If a peak acceleration is sufficiently large, then a 1D accelerometer, i.e., one axis accelerometer, will be able detect the peak acceleration even if the peak acceleration is perpendicular to the 1D axis of the accelerometer. However, a 3D accelerometer, i.e., tri-axis accelerometer, will be able to detect any peak acceleration from any direction, thus a 3D accelerometer is more reliable than 1D or 2D accelerometers.

In an aspect, the method may comprise a step of reporting problematic behaviour as a function of the periodic shocks.

The step of reporting may include trend analysis of the characteristics of periodic shocks such as the periodicity and/or mean intensity of the periodic shocks. If these characteristics increases above a threshold or large changes is observed, then a step of reporting problematic behaviour may be performed.

In an aspect, the structure may comprise two or more accelerometers installed at different positions on the structure, wherein the method further comprises a step of calculating a position of periodic shock origin of the periodic shocks.

The step of calculating a position or area of the periodic shock origin of the periodic shocks may be a step of triangulating as a function of peak acceleration data of the periodic shocks. Due to the periodicity of the periodic shocks, it is assumed that the periodic shocks have the same shock origin. The shock origin may move or be static relative to the structure.

The specific time of the periodic shocks registered at the two or more accelerometers can be used to triangulate a position of the shock origin provided that the shock origin is between the two accelerometers. Thus, the method can be improved by having a plurality of accelerometers dividing the structure into various zones, such that the shock origin can be determined by triangulation. Periodic shocks can be determined with greater precision than non-periodic shocks since the periodic shocks can be used in combination to triangulate the shock origin.

Non-periodic shocks may originate from the same source. This is however difficult to identify, as shocks at random intervals can be due to various different events.

In an embodiment, the structure is a wind turbine generator with one or more blades. In this embodiment, the step of calculating can for many periodic shocks be simplified by one accelerometer being positioned at or near the root of the one or more blades and by one or more accelerometers along the one or more blades. The root cause for many periodic shocks is a bearing defect, thus the accelerometer at the root of the blade will detect the periodic shock first followed by the accelerometers along the blade. Thus, the position of the shock origin can be calculated by simple means even without knowing a propagation speed through the blade. The step of calculating may utilise a propagation speed through the blade, which can be found by performing a tapping test at some point or if be calculated using sensory data of three accelerometers measuring a shock event, where the distance between accelerometers is known. The propagation speed may be provided by a third party or in any other way.

In an aspect, the method may further comprise a step of dividing the periodic shocks into two groups:
- a group of stationary shock origin, wherein the position of the periodic shock origin is stationary; and
- a group of moving shock origin, wherein the position of the periodic shock origin is changing.

A loose object in for example a wind turbine blade will during operation cause shocks as a function rotation of the wind turbine blade. A step of calculating a position or area of the periodic shock origin of the periodic shocks may be performed based on data from two or more accelerometers. If the shock origin changes position, the method places the periodic shocks into the group of moving shock origin.

If the shock origin is stationary, then the method places the periodic shocks into the group of stationary shock origin. In case of a wind turbine generator, the stationary shock origin may be due to physical defects in the blade structure, or bearing defects in the yawing or pitching mechanisms, or one or more loose blade studs in an individual blade.

There may be a further step of determining whether the periodic shock is induced at a certain position of the structure. If the structure is a blade, then the step of determining is performed when induced at a certain angular position of the blade.

In an aspect, the step of storing may include storing peak accelerations of the periodic shocks and the method further comprises steps of
- classifying shock source of the periodic shocks based on time and/or frequency domain analysis;
- identifying malfunctioning structures as a function of the shock source.

Various and different defects are expected to result in different periodic shocks, when classifying based on time and/or frequency domain analysis. A loose object may slide along part of the structure which may result in a decay, while a loose blade stud may have peaks in the trailing signal due to movement of the loose blade stud.

The step of classifying may be performed by summating the periodic shocks and classifying the summated periodic shocks.

The step of identifying malfunctioning structures as a function of the shock source can be an analysis of the shock source or of the structure in which the shockwave travels. Any structure will wear over time and there may be formation of cracks or the structure may have a production flaw.

A crack may cause a reflection of the shock wave and thus a malfunctioning structure can be identified by the identification of reflection in the sensory data of the peak accelerations. All kinds of dominant shocks can be used but sensory data of periodic shocks can be combined to enhance details.

Furthermore, the sensory data of periodic shocks stored months or years apart can be analysed for estimating changes to the structure such as changes to a wind turbine blades internal structure.

In an aspect, the method may further comprise a step of triggering an alarm as a function of the periodic shocks, and/or shock intensity of the periodic shocks, and/or mean of the shock intensity of the periodic shocks, and/or changes to shock intensity of the periodic shocks.

Thresholds for the number of periodic shocks, and/or shock intensity, and/or mean shock intensity of the periodic shocks, and/or changes to shock intensity of the periodic shocks, can be set and the method will trigger an alarm when above the threshold. Thereby, the structure can be repaired, and damage can be limited.

It is not uncommon that a wind turbine blade breaks in two or more parts. The method according to the invention would be able to prevent such a catastrophic failure by triggering an alarm.

In an aspect, the method may be performed on a plurality of similar structures, for example wind turbine generators (WTG) or wind turbine blades connected to a common rotor, wherein the method further comprises steps of
- comparing the plurality of similar structures as a function of the periodic shocks;
- identifying one or more outliers of the plurality of similar structures as a function of the periodic shocks; and
- alerting as a function of the one or more outliers.

The wind turbine generators (WTG) may be part of the same wind turbine farm, or the wind turbine generators (WTG) may be wind turbine generators produced in the same way.

The method will also function by comparing a wind turbine blade with the other wind turbine blade connected to the same motor. If one of the wind turbine blades have more periodic shocks or has a significantly higher mean intensity of the periodic shocks then it is easy to identify that this wind turbine blade is an outlier, then the method will alert an operator or an owner or the like. The owner or operator may then take a decision whether to repair or to stop the wind turbine generator.

An object of the invention is achieved by a wind turbine generator comprising one or more accelerometers and means to perform the steps of the method for identifying periodic shocks in a structure.

Thereby, the wind turbine generator will be able detect periodic shocks and quantify the periodic shocks as described earlier. Furthermore, the wind turbine generator will be able to detect changes to the structure of the WTG or parts of the wind turbine generator by analysing the periodic shocks in detail.

The wind turbine generator may comprise one or more wind turbine blades, such as three wind turbine blades. The one or more wind turbine blades may each be equipped with one or more accelerometers positioned along the respective wind turbine blades and thereby periodic shocks in one or more of the blades can be detected and analysed.

In an aspect, the wind turbine generator comprises one or more wind turbine blades, wherein the accelerometers may at least be positioned at a root of one or more of the wind turbine blades and along one or more of the wind turbine blades. This will greatly simplify the identification of periodic shocks originating from defect bearings.

An object of the invention is achieved by a wind farm comprising
- a plurality of wind turbine generators (WTG), wherein each of the plurality of wind turbine generators (WTG) comprises one or more accelerometers,
- a controller receiving from each of the plurality of wind turbine generators (WTG) sensory data from the one or more accelerometers, wherein the controller comprises the means to perform the steps of the method for identifying periodic shocks in a structure.

Thereby, the controller will collect data about periodic shocks from each wind turbine generator. This will enable a quantitative analysis of each wind turbine generators as each wind turbine generator can be compared with all the other wind turbine generators and thereby outliers can be identified and repaired or stopped. In this way, the method can be performed without any need for explaining the cause of the periodic shocks as it is clear that a wind turbine generator having ten times or more periodic shocks than the mean or median wind turbine generator should be serviced.

An object of the invention is achieved by a computer program product comprising instructions to cause the wind turbine generator or the wind farm to perform the steps of the method for identifying periodic dominant shocks in a structure.

An object of the invention is achieved by a computer-readable medium having stored thereon the computer program.

The method according to the invention can at least in part be performed for all dominant shocks binned together. The definition of a dominant shock and peak accelerations are the same as for the earlier described methods.

An object is achieved by a method for analysing dominant shocks in a structure, wherein the structure comprises one or more accelerometers. The method comprises steps of:
- measuring sensory data of the one or more accelerometers;
- timestamping and time synchronizing the sensory data and high-pass filtering the sensory data;
- identifying peak accelerations, wherein the peak accelerations are defined as accelerations above a threshold value;
- identifying dominant shocks, wherein the dominant shocks are defined as the highest value of each peak acceleration;
- a step of binning data into binned data as a function of a pre-set period, and
- storing for each set of binned data a timestamp, characteristics of dominant shocks and optionally the sensory data of the dominant shocks;
- analysing the stored data.

The threshold value may be a dynamic value. First, a mean value (x̅) and a standard deviation (*σ*) of the data in a time interval, which may be equal to the pre-set period, is calculated and a multiplier (*θ*) is chosen such that the threshold value is x̅ + (*σ* × *θ*) . The multiplier is chosen such that the number of false positives and false negatives are reduced. The value of the multiplier depends on the structure and size of the peak accelerations, however the skilled person would be able to choose a suitable multiplier through standard experiments or trial and error. Any value above the threshold value is identified as a peak acceleration.

The multiplier may be chosen so that it maximizes an F1 score, which is the balance of precision and recall. Precision and recall themselves are functions of true positives, false positives and false negatives. This may be varied in specific cases.

The step of binning simplifies the data and reduces the computation power needed for analysing the data. The entire data set may be months or years of data thus the binning reduces complexity and enables that the stored data of a structure can be compared with other similar or identical structures by a simple comparison such as number of dominant shocks or mean intensity of the dominant shocks. It is evident that if one structure has ten times as many dominant shocks as another similar structure, then it may be necessary to inspect and/or repair the structure with many dominant shocks. Thus, an informed conclusion can be made without knowing the cause or severity of the cause or causes of the dominant shocks.

The step of analysing may include trend analysis or comparisons with other similar structures.

In an aspect, the structure may be chosen amongst
- one or more wind turbine blades; or
- a wind turbine tower; or
- a wind turbine nacelle; or
- a wind turbine rotor hub; or
- a wind turbine generator; or
- a pylon; or
- a high-rise building; or
- a bridge; or
- a dam.

In an aspect, the one or more accelerometers may be chosen amongst 1D, 2D, or 3D accelerometers. If a peak acceleration is sufficiently large, then a 1D accelerometer, i.e., one axis accelerometer, will be able detect the peak acceleration even if the peak acceleration is perpendicular to the 1D axis of the accelerometer. However, a 3D accelerometer, i.e., tri-axis accelerometer, will be able to detect any peak acceleration from any direction, thus a 3D accelerometer is more reliable than 1D or 2D accelerometers.

If a peak acceleration is sufficiently large, then a 1D accelerometer, i.e., one axis accelerometer, will be able detect the peak acceleration even if the peak acceleration is perpendicular to the 1D axis of the accelerometer. However, a 3D accelerometer, i.e., tri-axis accelerometer, will be able to detect any peak acceleration from any direction, thus a 3D accelerometer is more reliable than 1D or 2D accelerometers.

In an aspect, the step of analyzing may comprise a step of triggering an alarm as a function of the characteristics of dominant shocks such as shock intensity of the dominant shocks, and/or mean of shock intensity of the dominant shocks, and/or changes to shock intensity of the dominant shocks.

Thresholds for the number of dominant shocks, and/or shock intensity, and/or mean shock intensity of the dominant shocks, and/or changes to shock intensity of the dominant shocks, can be set and the method will trigger an alarm when above the threshold. Thereby, the structure can be repaired, and damage can be limited.

It is not uncommon that a wind turbine blade breaks in two or more parts. The method according to the invention would be able to prevent such a catastrophic failure by triggering an alarm.

In an aspect, the characteristics of dominant shocks may include storing mean shock intensity of the dominant shocks.

Thereby, the method enables monitoring of the dominant shocks over time and detection of changes over time of the mean shock intensity of the dominant shocks. This enables a user to estimate a future mean shock intensity and optionally a time for needed repair of the structure.

A trend analysis will enable to predict when the structure for example a blade or wind turbine generator would require repair.

In an aspect, the method may comprise a step of reporting problematic behaviour as a function of the dominant shocks.

The step of reporting may include trend analysis of the characteristics of dominant shocks such as the periodicity and/or mean intensity of the dominant shocks. If these characteristics increases above a threshold or large changes is observed, then a step of reporting problematic behaviour may be performed.

In an aspect, the structure comprises two or more accelerometers installed at different positions on the structure, wherein the method further comprises a step of calculating a position of dominant shock origin of the dominant shocks.

The step of calculating a position or area of the periodic shock origin of the dominant shocks may be a step of triangulating as a function of peak acceleration data of the dominant shocks.

In an aspect, the step of storing may include storing peak accelerations of the dominant shocks and the method further comprises steps of
- classifying shock source of the dominant shocks based on time and/or frequency domain analysis;
- identifying malfunctioning structures as a function of the shock source.

Various and different defects are expected to result in different dominant shocks, when classifying based on time and/or frequency domain analysis.

The step of classifying may be performed by summating the dominant shocks and classifying the summated dominant shocks.

The step of identifying malfunctioning structures as a function of the shock source can be an analysis of the shock source or of the structure in which the shockwave travels. Any structure will wear over time and there may be formation of cracks or the structure may have a production flaw.

A crack may cause a reflection of the shock wave and thus a malfunctioning structure can be identified by the identification of reflection in the sensory data of the peak accelerations.

Furthermore, the sensory data of dominant shocks stored months or years apart can be analysed for estimating changes to the structure such as changes to a wind turbine blades internal structure.

In an aspect, the method may be performed on a plurality of similar structures for example wind turbine generators or wind turbine blades connected to a common rotor, wherein the method further comprises steps of
- comparing the plurality of similar structures as a function of dominant shock;
- identifying one or more outliers of the plurality of similar structures as a function of dominant shock, and
- alerting as a function of the one or more outliers.

The wind turbine generators (WTG) may be part of the same wind turbine farm, or the wind turbine generators (WTG) may be wind turbine generators produced in the same way.

The method will also function by comparing a wind turbine blade with the other wind turbine blade connected to the same motor. If one of the wind turbine blades have more periodic shocks or has a significantly higher mean intensity of the periodic shocks then it is easy to identify that this wind turbine blade is an outlier, then the method will alert an operator or an owner or the like. The owner or operator may then take a decision whether to repair or to stop the wind turbine generator.

An object is achieved by a wind turbine generator comprising one or more accelerometers and means to perform the steps of the method for analysing dominant shocks in a structure.

Thereby, the wind turbine generator will be able detect dominant shocks and quantify the dominant shocks as described earlier. Furthermore, the wind turbine generator will be able to detect changes to the structure of the WTG or parts of the wind turbine generator by analysing the periodic shocks in detail.

The wind turbine generator may comprise one or more wind turbine blades, such as three wind turbine blades. The one or more wind turbine blades may each be equipped with one or more accelerometers positioned along the respective wind turbine blades and thereby periodic shocks in one or more of the blades can be detected and analysed.

In an aspect, the wind turbine generator comprises one or more wind turbine blades, wherein the accelerometers may at least be positioned at a root of one or more of the wind turbine blades and along one or more of the wind turbine blades. This will greatly simplify the identification of dominant shocks originating from defect bearings.

An object is achieved by a wind farm comprising
- a plurality of wind turbine generators, wherein each of the plurality of wind turbine generators comprises one or more accelerometers,
- a controller receiving from each of the plurality of wind turbine generators sensory data from the one or more accelerometers, wherein the controller comprises the means to perform the steps of the method for analysing dominant shocks in a structure.

Thereby, the controller will collect data about dominant shocks from each wind turbine generator. This will enable a quantitative analysis of each wind turbine generators as each wind turbine generator can be compared with all the other wind turbine generators and thereby outliers can be identified and repaired or stopped. In this way, the method can be performed without any need for explaining the cause of the periodic shocks as it is clear that a wind turbine generator having ten times or more dominant shocks than the mean or median wind turbine generator should be serviced.

### Description of the Drawing

Embodiments of the invention will be described in the figures, whereon:
Fig. 1 illustrates a structure being a wind turbine generator;
Fig. 2 illustrates a wind turbine generator having a blade with two 3D accelerometers positioned along the blade;
Fig. 3 illustrates sensory data from accelerometer installed on a wind turbine blade;
Fig. 4 illustrates a step of identifying dominant shocks in the sensory data;
Fig. 5 illustrates a step of identifying periodic shocks;
Fig. 6 illustrates a step of comparing two structures as a function of periodic shocks
Fig. 7 illustrates total number of shocks and mean shock intensity as a function of time measured for a wind turbine blade;
Fig. 8 illustrates for a wind turbine blade dominant shocks measured during a tapping test, in operation and when the wind turbine is not in operation;
Fig. 9 illustrates a combination of 500 periodic shocks (A) and a combination of 1000 dominant shocks (B);

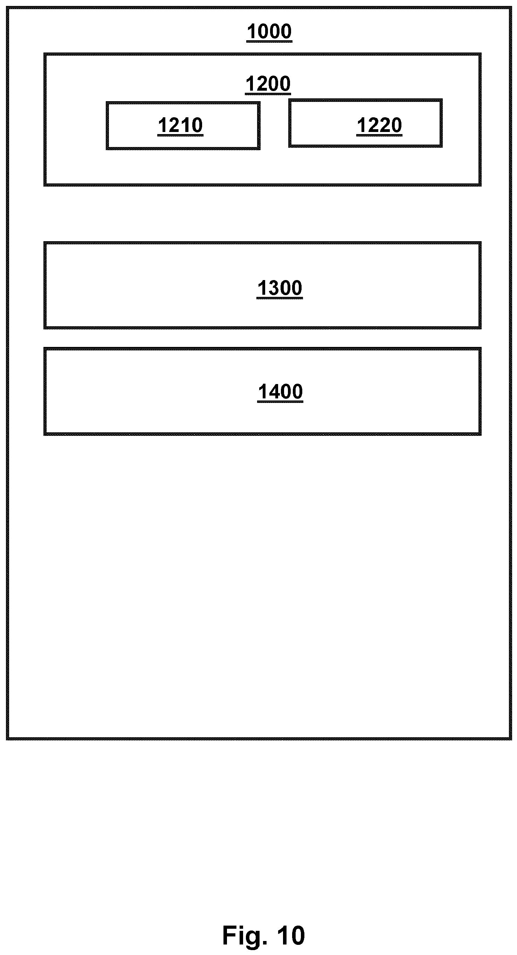

Fig. 10 illustrates a method for identifying periodic shocks in a structure; and
Fig. 11 illustrates a method for analyzing dominant shocks in a structure.

### Detailed Description of the Invention

| **Item** | **No** |
|---|---|
| Structure | 10 |
| Wind turbine blade /blade | 11 |
| Wind turbine tower | 12 |
| Wind turbine rotor hub / rotor hub | 13 |
| Wind turbine nacelle / nacelle | 14 |
| Wind turbine generator | WTG |
| Accelerometers | 20 |
| Alarm | 30 |
| Wind farm | 40 |
| Controller | 50 |
| Sensory data | 120 |
| Peak accelerations | 130 |
| Dominant shocks | 132 |
| Periodic shocks | 134 |
| Mean shock intensity | 136 |
| Shock intensity | 138 |
| Position of periodic/dominant shock origin | 140 |
| Threshold value | 200 |
| Time and/or frequency domain analysis | 500 |
| Method | 1000 |
| Measuring | 1200 |
| Timestamping and time synchronizing | 1210 |
| High-pass filtering | 1220 |
| Identifying | 1300 |
| Storing | 1400 |
| Binning | 1410 |
| Reporting | 1500 |
| Calculating | 1600 |
| Dividing | 1700 |
| Classifying | 1800 |
| Triggering | 1900 |
| Comparing | 2100 |
| Alerting | 2200 |

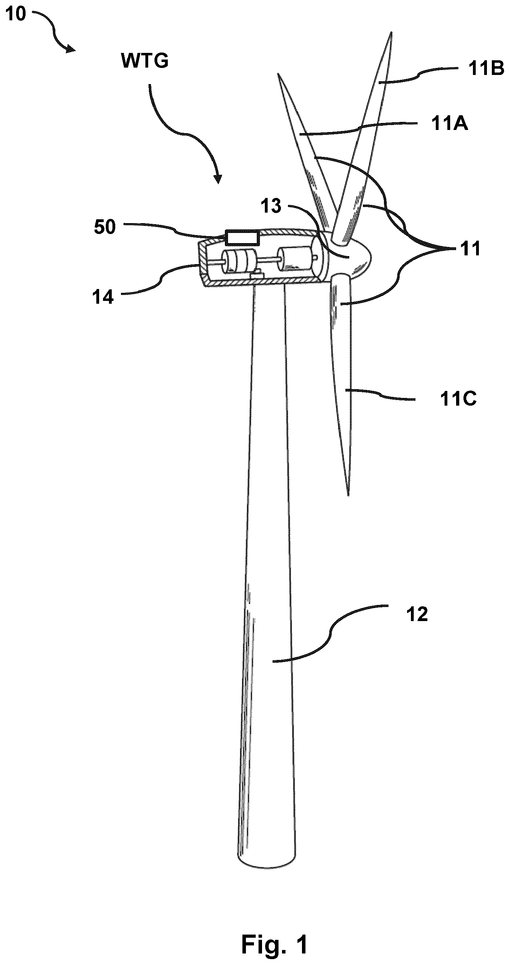

Fig. 1 illustrates a structure 10 being a wind turbine generator WTG. The wind turbine generator WTG is supposed to illustrate a standard wind turbine generator WTG. The wind turbine generator WTG comprises a wind turbine tower 12, which is connected to a wind turbine nacelle 14. The nacelle 14 is connected to a wind turbine rotor hub 13 having three wind turbine blades 11, 11A, 11B, 11C.

The wind turbine generator WTG may comprise a controller 50. The controller 50 is shown to be positioned in the nacelle 13, however the controller 50 could be positioned anywhere even external to the wind turbine generator WTG, and in some embodiments the controller 50 is an external server, which receives the sensory data 120 from a plurality of wind turbine generators WTG

The controller 50 may be configured to perform the method 1000 for identifying periodic shocks 134 in a structure 10 according to the invention or to perform the method 1000 for analyzing dominant shocks 132 in a structure 10.

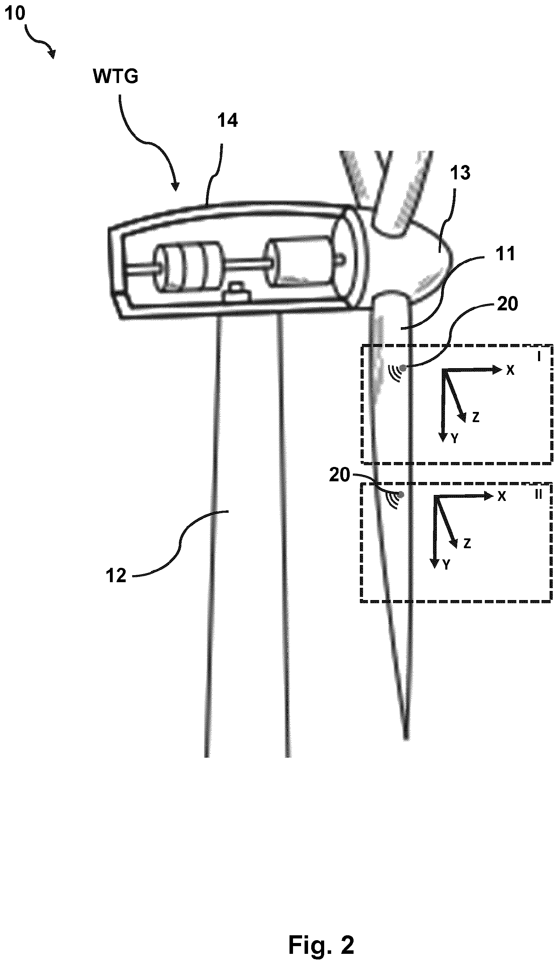

Fig. 2 illustrates a wind turbine generator WTG having a blade 11 with two 3D accelerometers 20I, 20II positioned along the blade 11. Here the blade 11 can be viewed as the structure 10 or the wind turbine generator WTG can be viewed as the structure 10.

The blade 16 does not need to be equipped with two accelerometers 20I, 20II as a single accelerometer 20 is sufficient to identify periodic shocks 134 or dominant shocks 132 in general. However, two accelerometers 201, 20II enable triangulation of the shock origin if the shock origin is between the two accelerometers 201, 20II. If the propagation speed is known, then it is not required that the shock origin is between the two accelerometers 20I, 20II.

In some embodiments, the blade 16 may have an accelerometer 20 positioned at the root of the blade 11 close to the rotor hub 13.

The shown accelerometers 20I, 20II are 3D (tri-axis) accelerometers 20I, 20II as this enable better shock detection from every direction. Single or double axis accelerometer could be used for detecting dominant shocks.

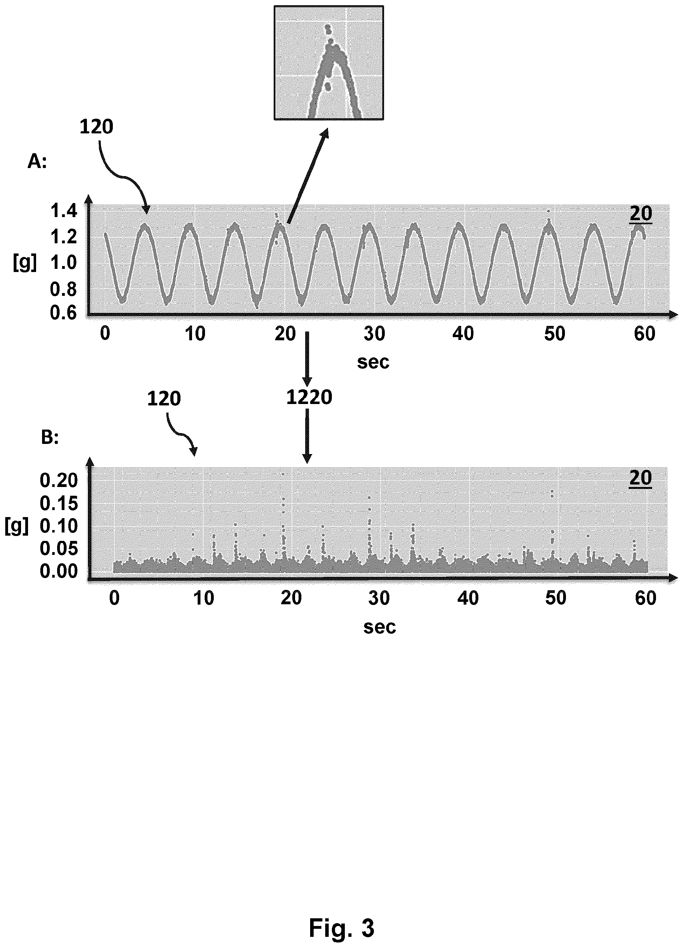

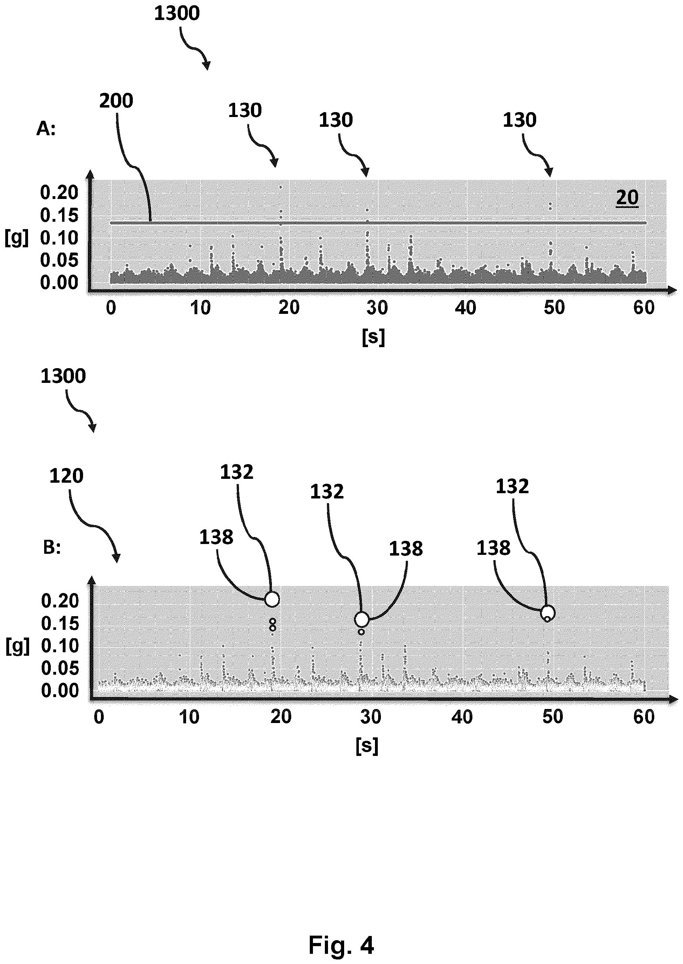

Fig. 3 illustrates sensory data 120 from accelerometer 20 on a wind turbine blade 11. The sensory data 120 is measured over a period of 60 second on a wind turbine generator during operation. Thus, sensory data 120 is oscillation with a frequency corresponding to the rounds per minute of the wind turbine blade 11. In this case the RPM is roughly 12 RPM. As can be seen in the close-up in Figure 3A, a shock may have a signal being smaller than changes due to rotation of the blade 11, thus a step of high-pass filtering is performed on the sensory data 120. The result is shown in figure 3B and here there are clear peaks which could be from peak accelerations as defined in the invention. In figure 4, dominant shocks are identified based on the data shown in figure 3B.

Fig. 4 illustrates a step of identifying 1300 dominant shocks 132 in the sensory data 120. In figure 4A all data points are compared with a threshold value 200. The threshold value 200 may be chosen as described in the general description.

Peaks above the threshold value 200 are identified 1300 as peak accelerations 130. The present graph has three peak accelerations 130.

In figure 4B, the peak accelerations 130 have been analyzed and dominant shocks 132 for each peak acceleration 130 are identified 1300, wherein the dominant shocks 132 are defined as the highest value of each peak acceleration 130. The graph will at the same time show the intensity 138 of each dominant shock 132.

If one performed a step of identifying 1300 periodic shocks 134 as a function of the dominant shocks 132 on the data shown in figure 4B, then no periodic shocks 134 would be identified since it would require at least three dominant shocks 132 being periodic. These shocks are not classified as periodic.

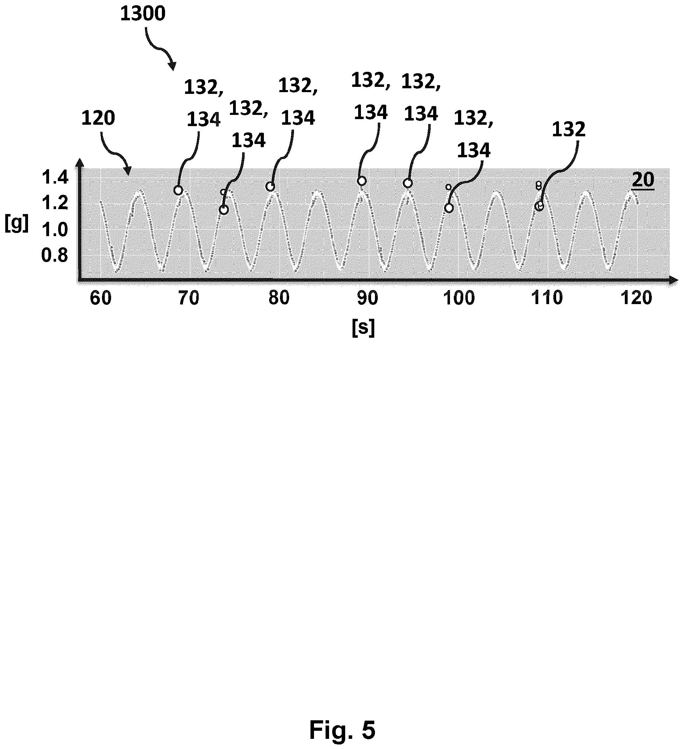

Fig. 5 illustrates a step of identifying 1300 periodic shocks 134. Figure 5 discloses sensory data 120 with periodic shocks 134. The sensory data 120 is measured on blade 11 of a wind turbine generator WTG during operation.

The periodic shocks 134 are in figure 5 shown with the raw sensory data 120, however the sensory data 120 has been treated as shown in figure 3 and figure 4, and the periodic shocks 134 were identified 1300 as described. By showing the periodic shocks 134 on the raw sensory data 120, it becomes easier to compare with the RPM of the wind turbine generator WTG.

Here there are two groups of three periodic shocks 134 where a period is comparable to the RPM of the WTG. All the periodic shocks 134 occur near the top of the raw sensory data 120 and the last dominant shock 132 also occur near the top of the raw sensory data 120. In this case, the top of the oscillation corresponds to when the blade 11 is in the 6 O'clock position, i.e., the lower most position.

In this specific case, the periodic shocks 134 was due to a loose object causing a shock when the blade was in a lower most position.

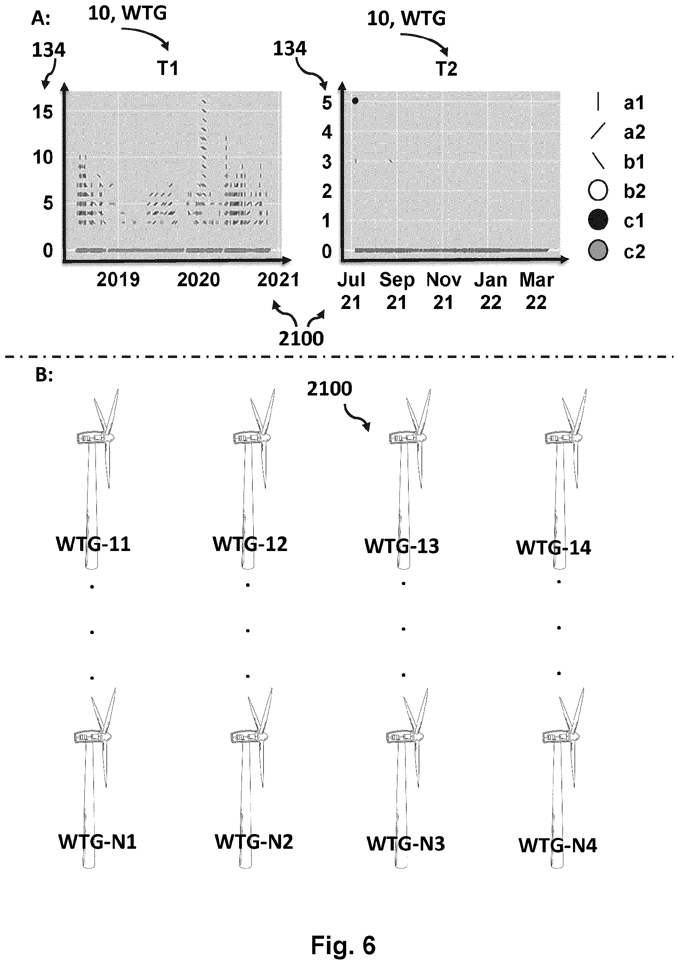

Fig. 6 illustrates a step of comparing 2100 two structures 10 as a function of periodic shocks 134.

Fig. 6A discloses two graphs having time along the first axis and the number of periodic shocks 134 along the second axis. The first graph contains data over roughly three years, while the second graph contains data over roughly nine months. In each case, sensory data 120 was measured on a wind turbine generator WTG having three blades 11 similar to figures 1 and 2. Each blade 11 was equipped with two accelerometers 20. If a periodic shock 134 was detected by an accelerometer 20, then it was marked according to the legend (a1, a2, b 1, b2, c1, c2), where a1 and a2 are the two accelerometers 20 on the first blade, b1 and b2 are the two accelerometers 20 on the second blade, and c1 and c2 are the two accelerometers 20 on the third blade.

There is a clear difference between the number periodic shocks between the two wind turbine generators WTG. Thus, there is probably something wrong with the wind turbine generator on the left. There may be a step of alarming an owner or controller, who may then take a decision whether to repair or stop the wind turbine generator.

The step of comparing will only become stronger as more wind turbine generators (WTG) are compared. Thus, a step of comparing WTG-11,..., WTG-1N would increase precision of the comparison.

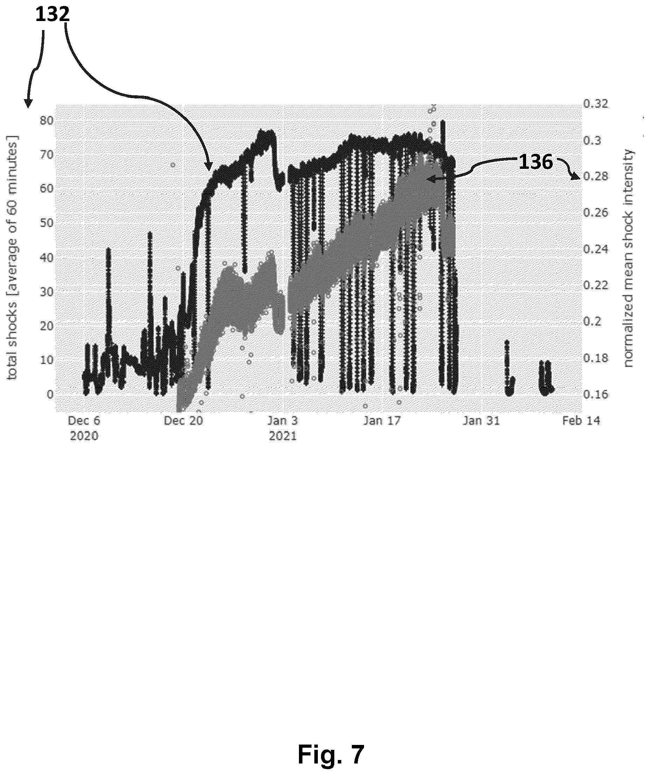

Fig. 7 illustrates total number of dominant shocks 132 and mean shock intensity 136 as a function of time measured for a wind turbine blade 11. The wind turbine blade 11 was placed in a test rig and was stress tested.

The graph shows that there is a general trend an increase in the number of dominant shocks 132. The number of dominant shocks 132 is represented on the axis on the left and colored black on the graph. The mean shock intensity 136 is represented on the axis on the right and the measurements are colored with a grey. The mean shock intensity 136 increases over time and the increase is linear in some sections. The increase in the mean shock intensity 136 is believed to be due to wear. Thus, it will be possible to perform trend analysis and/or perform a step of reporting 1500 problematic behavior as a function of the dominant shocks 132.

The shown graph and trend analysis could also be performed for only the periodic shocks 134 or for only the non-periodic shocks.

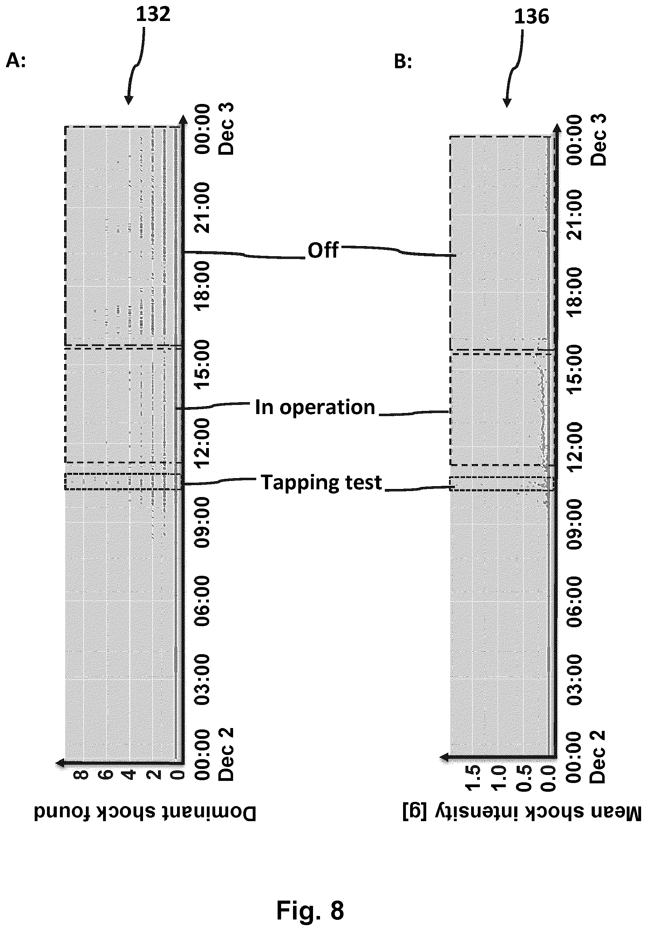

Fig. 8 illustrates dominant shocks 132 during a tapping test of a wind turbine blade 11, when the wind turbine generator WTG is in operation and when the wind turbine generator WTG is not in operation. The tapping test can be used for calibration and for determining the propagation speed.

Fig. 8A shows the number of dominant shocks 132, and figure 8B shows the mean of the dominant shocks.

It is believed that the high number of dominant shocks 132 when the wind turbine generator WTG is off is due to the method using a dynamic threshold value as described in the general description. The sensory data will have a low variance when the blade is at standstill.

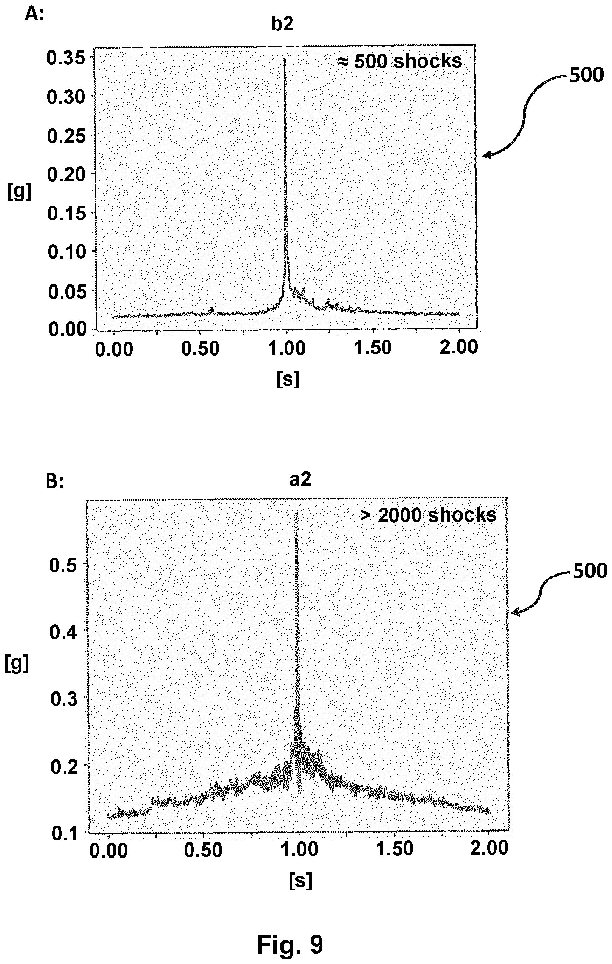

Fig. 9 illustrates a combination of 500 periodic shocks (A) and a combination of 1000 dominant shocks (B).

The averaging of 500 periodic shocks can be used for determining whether an apparent loose object is actually multiple loose objects as this is expected to increase the decay time i.e. have a longer tail. Thus, a time and/or frequency domain analysis 500 can be used for revealing characteristics of the shock source.

It may be possible to identify cracks by observing reflections from a wave propagating through a structure and/or a blade, where the wave is reflected due to the crack.

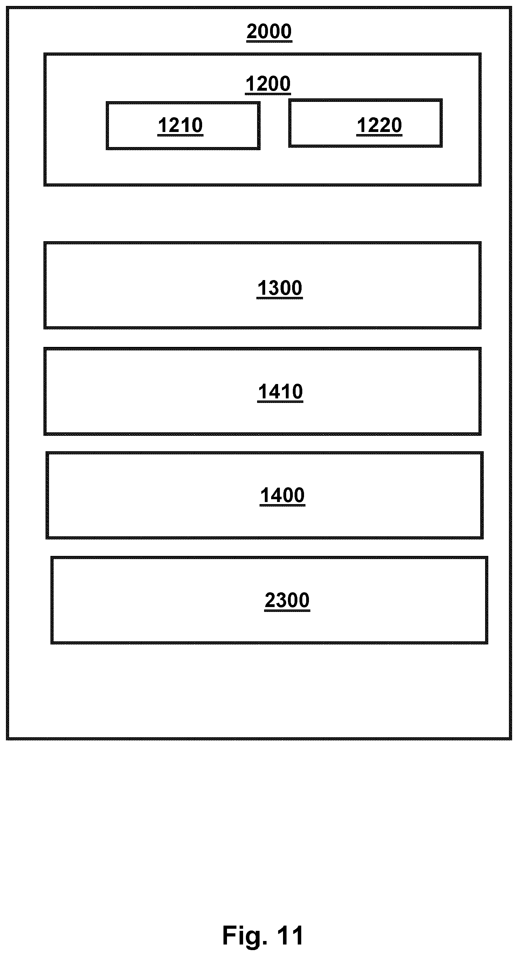

Fig. 11 illustrates a method 1000 for identifying periodic shocks 134 in a structure 10, wherein the structure 10 comprises one or more accelerometers 20.

The method 1000 comprises steps of:
- measuring 1200 sensory data 120 of the one or more accelerometers 20;
- timestamping and time synchronizing 1210 the sensory data 120 and high-pass filtering 1220 the sensory data 120;
- identifying 1300 peak accelerations 130, wherein the peak accelerations 130 are defined as accelerations above a threshold value 200;
- identifying 1300 dominant shocks 132, wherein the dominant shocks 132 are defined as the highest value of each peak acceleration 130;
- identifying 1300 periodic shocks 134 as a function of the dominant shocks 132;
- storing 1400 characteristics of periodic shocks 134, and optionally the sensory data 120 of the periodic shocks 134.

Fig. 12 illustrates a method 1000 for analyzing dominant shocks 132 in a structure 10.

A method 1000 for analysing dominant shocks in a structure 10, wherein the structure 10 comprises one or more accelerometers 20. The method comprises steps of:
- measuring 1200 sensory data 80 of the one or more accelerometers 20;
- timestamping and time synchronizing 1210 the sensory data 80 and high-pass filtering 1220 the sensory data 80;
- identifying 1300 peak accelerations 130, wherein the peak accelerations 130 are defined as accelerations above a threshold value 200;
- identifying 1300 dominant shocks 132, wherein the dominant shocks 132 are defined as the highest value of each peak acceleration 132;
- a step of binning 1410 data into binned data as a function of a pre-set period, and
- storing 1400 for each set of binned data a timestamp, characteristics of dominant shocks 132 and optionally the sensory data 120 of the dominant shocks 132
- analysing 2300 the stored data.

## Claims

1. A method (1000) for identifying periodic shocks in a structure (10), wherein the structure (10) comprises one or more accelerometers (20), the method (1000) comprises steps of:
- measuring (1200) sensory data (120) of the one or more accelerometers (20);
- timestamping and time synchronizing (1210) the sensory data (120) and high-pass filtering (1220) the sensory data (120);
- identifying (1300) peak accelerations (130), wherein the peak accelerations (130) are defined as accelerations above a threshold value (200);
- identifying (1300) dominant shocks (132), wherein the dominant shocks (132) are defined as the highest value of each peak acceleration (130);
- identifying (1300) periodic shocks (134) as a function of the dominant shocks (132);
- storing (1400) characteristics of periodic shocks (134), and optionally the sensory data (120) of the periodic shocks (134).

2. Method (1000) according to claim 1, wherein the step of storing (1400) includes a step of binning (1410) data into binned data as a function of a pre-set period (210), and for each set of binned data the step of storing (1400) includes storing a timestamp of the binned data, the characteristics of the periodic shocks (134).

3. Method (1000) according to claim 1 or 2, wherein the structure (10) is chosen amongst
- a wind turbine blade (11); or
- a wind turbine tower (12); or
- a wind turbine rotor hub (13); or
- a wind turbine nacelle (14); or
- a wind turbine generator (WTG); or
- a pylon; or
- a high-rise building; or
- a bridge; or
- a dam.

4. Method (1000) according to claim 3, wherein the step of storing (1400) includes storing RPM of the one or more wind turbine blades (11) during the periodic shocks (134),
wherein the step of identifying (1300) periodic shocks (134) is further performed as a function of the RPM.

5. Method (1000) according to any one of claims 1-4, wherein the characteristics of periodic shocks (134) include storing mean shock intensity (136) of the periodic shocks (134).

6. Method (1000) according to any one of claims 1-5, wherein the one or more accelerometers (20) is chosen amongst 1D, 2D or 3D accelerometers.

7. Method (1000) according to any one of claims 1-6, wherein the method (1000) comprises a step of reporting (1500) problematic behaviour as a function of the periodic shocks (134).

8. Method (1000) according to any one of claims 1-7, wherein the structure (10) comprises two or more accelerometers (20) installed at different positions on the structure (10), wherein the method (1000) further comprises a step of calculating (1600) a position of periodic shock origin (140) of the periodic shocks (134).

9. Method (1000) according to claim 8, wherein the method (1000) further comprises a step of dividing the periodic shocks (134) into two groups:
- a group of stationary shock origin, wherein the position of the periodic shock origin (140) is stationary; and
- a group of moving shock origin, wherein the position of the periodic shock origin (140) is changing.

10. Method (1000) according to any one of claims 1-9, wherein the step of storing (1400) includes storing peak accelerations (130) of the periodic shocks (134) and the method (1000) further comprises steps of
- classifying (1800) shock source of the periodic shocks (134) based on time and/or frequency domain analysis (500);
- identifying (1300) malfunctioning structures as a function of the shock source.

11. Method (1000) according to any one of claims 1-10, wherein the method (1000) further comprises a step of triggering (1900) an alarm (30) as a function of the characteristics of the periodic shocks (134), and/or shock intensity (138) of the periodic shocks (134), and/or mean shock intensity (136) of the periodic shocks (134), and/or changes to shock intensity (138), of the periodic shocks (134).

12. Method (1000) according to any one of claims 1-11, wherein the method (1000) is performed on a plurality of similar structures (10), for example wind turbine generators (WTG) or wind turbine blades (11) connected to a common rotor (13), wherein the method (1000) further comprises steps of
- comparing (2100) the plurality of similar structures (10) as a function of the periodic shocks (134);
- identifying (1300) one or more outliers of the plurality of similar structures (10) as a function of the periodic shocks (134).
- alerting (2200) as a function of the one or more outliers.

13. A wind turbine generator (15) comprising one or more accelerometers (20) and means to perform the steps of the method (1000) according to any one or more of claims 1 to 12.

14. A wind turbine generator (15) comprising one or more wind turbine blades (16), wherein the accelerometers (20) are at least positioned at a root of one or more of the wind turbine blades (16) and along one or more of the wind turbine blades (16).

15. A wind farm (40) comprising
- a plurality of wind turbine generators (WTG), wherein each of the plurality of wind turbine generators (WTG) comprises one or more accelerometers (20),
- a controller (50) receiving from each of the plurality of wind turbine generators (WTG) sensory data (120) from the one or more accelerometers (20), wherein the controller (50) comprises the means to perform the steps of the method (1000) according to any one or more of claims 1 to 12.

16. A method (1000) for analysing dominant shocks in a structure (10), wherein the structure (10) comprises one or more accelerometers (20), the method comprises steps of:
- measuring (1100) sensory data (80) of the one or more accelerometers (20);
- timestamping and time synchronizing (210) the sensory data (80) and high-pass filtering (220) the sensory data (80);
- identifying (1300) peak accelerations (130), wherein the peak accelerations (130) are defined as accelerations above a threshold value (200);
- identifying (1300) dominant shocks (132), wherein the dominant shocks (132) are defined as the highest value of each peak acceleration (132);
- a step of binning (1410) data into binned data as a function of a pre-set period, and
- storing (1400) for each set of binned data a timestamp, characteristics of dominant shocks (132) and optionally the sensory data (120) of the dominant shocks (132);
- analysing (2300) the stored data.

17. Method (1000) according to claim 16, wherein the structure (10) is chosen amongst
- one or more wind turbine blades (11); or
- a wind turbine tower; or
- a wind turbine nacelle; or
- a wind turbine rotor hub (13); or
- a wind turbine generator (WTG); or
- a pylon; or
- a high-rise building; or
- a bridge; or
- a dam.

18. Method (1000) according to any one of claims 16-17, wherein the one or more accelerometers (20) are chosen amongst 1D, 2D, or 3D, accelerometers.

19. Method (1000) according to any one of claims 16-18, wherein the characteristics of dominant shocks (132) include storing mean shock intensity (136) of the dominant shocks (132).

20. Method (1000) according to any one of claims 16-19, wherein the method (1000) comprises a step of reporting (1500) problematic behaviour as a function of the dominant shocks (134).

21. Method (1000) according to any one of claims 16-20, wherein the structure (10) comprises two or more accelerometers (20) installed at different positions on the structure (10), wherein the method (1000) further comprises a step of calculating (1600) a position of dominant shock origin (140) of the dominant shocks (132).

22. Method (1000) according to any one of claims 16-21, wherein the step of analysing (2300) further comprises a step of triggering (1900) an alarm (30) as a function of the characteristics of the dominant shocks (132), such as shock intensity (138) of the dominant shocks (132), and/or mean of shock intensity (138) of the dominant shocks (132), and/or changes to shock intensity (138) of the dominant shocks (132).

23. Method (1000) according to any one of claims 16-22, wherein the method (1000) is performed on a plurality of similar structures (10) for example wind turbine generators (WTG) or wind turbine blades (11) connected to a common rotor, wherein the method further comprises steps of
- comparing (2100) the plurality of similar structures as a function of dominant shocks;
- identifying (1300) one or more outliers of the plurality of similar structures as a function of dominant shock, and
- alerting (2200) as a function of the one or more outliers.

24. A wind turbine generator (WTG) comprising one or more accelerometers (20) and means to perform the steps of the method according to any one or more of claims 16 to 23.

25. A wind farm (40) comprising
- a plurality of wind turbine generators (WTG), wherein each of the plurality of wind turbine generators (WTG) comprises one or more accelerometers (20),
- a controller (50) receiving from each of the plurality of wind turbine generators (WTG) sensory data (120) from the one or more accelerometers, wherein the controller (50) comprises the means to perform the steps of the method (1000) according to any one or more of claims 16 to 23.
